(19)

**Europäisches Patentamt**

**European Patent Office**

**Office européen des brevets**

(11)  **EP 4 749 599 A1**

(12)  **EUROPEAN PATENT APPLICATION**

(43) Date of publication:
     **27.05.2026  Bulletin 2026/22**

(21) Application number: **24215606.5**

(22) Date of filing: **26.11.2024**

(51) International Patent Classification (IPC):
     **G08G 1/16** (2006.01)    **G08G 1/01** (2006.01)
     **G01C 21/34** (2006.01)   **G01C 21/36** (2006.01)

(52) Cooperative Patent Classification (CPC):
     **G08G 1/167; G01C 21/3492; G01C 21/3658;
     G08G 1/0112; G08G 1/0133; G08G 1/0141;
     G08G 1/0145**

(84) Designated Contracting States:
     **AL AT BE BG CH CY CZ DE DK EE ES FI FR GB
     GR HR HU IE IS IT LI LT LU LV MC ME MK MT NL
     NO PL PT RO RS SE SI SK SM TR**
     Designated Extension States:
     **BA**
     Designated Validation States:
     **GE KH MA MD TN**

(71) Applicant: **TomTom Traffic B.V.
     1011 AC Amsterdam (NL)**

(72) Inventors:
     • **Byfut, Andreas
       1011 AC Amsterdam (NL)**
     • **Petzold, Lars
       1011 AC Amsterdam (NL)**
     • **Witte, Nikolaus
       1011 AC Amsterdam (NL)**
     • **Müller, Yves Etienne
       1011 AC Amsterdam (NL)**

(74) Representative: **Meier, Florian
     meier ip
     Buschingstraße 65 (6. OG)
     81677 München (DE)**

(54)  **METHOD AND PROCESSING SYSTEM FOR PERFORMANCE OF A LANE-LEVEL FUNCTION**

(57)  A processing system (20) is operative to process probe data (48) to identify a traffic obstruction in a navigable network and determine lane-specific speeds for several edges of the navigable network that overlap with the traffic obstruction. The processing system (20) is operative to determine, based at least on the lane-specific speeds, a lane suggestion. The processing system (20) is operative to identify a lane to be entered that allows passage through the traffic obstruction while minimizing an objective function with a constraint imposed on a number of lane changes while travelling through the traffic obstruction. The processing system (20) is operative to generate output (49) based at least on the lane suggestion.

FIG. 1

EP 4 749 599 A1

**Description**

TECHNICAL FIELD

Embodiments of the invention relate to techniques associated with processing probe data for performance of a lane level traffic-based function. Embodiments of the invention relate in particular to techniques of processing probe data for providing lane-level functions useful in association with traffic obstructions, such as traffic jams, on multi-lane roads.

BACKGROUND

Routing, navigation, driver assistance, and automated driving are widely used. These techniques use electronic map data in combination with a global navigation satellite system (GNSS)-based vehicle location and/or other sensor data to provide accurate guidance, driver assistance, and/or enable autonomous driving.

More recently, there is a trend to perform routing, navigation, driver assistance and/or other function at a lane level, instead of just at the road level. This trend is driven by several factors that aim to enhance safety, efficiency, and precision in vehicle operation. In association with traffic obstructions that occur on multi-lane roads that have several lanes for a same driving direction, lane-level functions are particularly desirable to enhance safety, reduce travel time when passing through the traffic obstruction and/or reduce energy consumption when passing through the traffic obstruction.

The need for lane level traffic functions is increased by road situations in which there are physical barriers between lanes, which make it impossible to change lanes while travelling along a road segment, and/or by lane rerouting. Lane rerouting may sometimes be implemented in such a manner that a lane for a driving direction is rerouted to an area that, prior to the lane rerouting, was reserved for the oppositive driving direction. Such situations make lane level functions more challenging, but also more important.

KR 10 161 5970 B1 and US 2013/0282264 A1 disclose techniques that can be used to provide driver assistance. The techniques of KR 10 161 5970 B1 require dedicated short-range communications, which can limit the availability and accessibility of the techniques of KR 10 161 5970 B1. For illustration, not all vehicles may be equipped with the required dedicated short-range communication capabilities. The techniques of US 2013/0282264 A1 are useful for implementing lane-level functions.

Considerations such as energy consumption of vehicles in a traffic jam or other traffic obstruction on a multi-lane road are getting increasingly important to make a contribution to the objective of reducing energy consumption associated with traffic. Thereby, lane-level functions could contribute to more environmentally friendly traffic, which is important to tackle the challenge of global warming. Thus, there is still a need for enhanced techniques for providing lane-level functions useful in association with traffic obstructions, such as traffic jams, on multi-lane roads. There is in particular a need for techniques useful in choosing a lane to be entered at an end of the traffic obstruction (e.g., at a tail end of a traffic jam) based on objective criteria, which can be operative to contribute to reduced energy consumption and/or enhanced safety.

In view of the above, there is a need for improved methods, devices, and systems useful in association with lane-level functions, such as lane-level functions capable of identifying a lane suggestion for passage through a traffic obstruction.

SUMMARY

It is an object of embodiments of the invention to provide methods, systems, and/or machine-readable instruction code that provide enhanced techniques useful in association with a lane level traffic-based function. It is in particular an object of embodiments to provide methods, systems, and/or machine-readable instruction code capable of identifying a lane suggestion for passage through a traffic obstruction. It is an optional object to provide methods, systems, and/or machine-readable instruction code capable of identifying the lane suggestion in a manner that enhances safety, reduces energy consumption, and/or considers travel time.

According to embodiments of the invention, a method, a processing system, a system, and machine-readable instruction code as recited in the independent claims are provided. The dependent claims define preferred and advantageous embodiments.

According to an aspect of the invention, a method of performing a lane-level function is provided. The method comprises identifying, by a processing system, a traffic obstruction in a navigable network. The method comprises determining, by the processing system, several edges of the navigable network along which the traffic obstruction extends, wherein the several edges are adjacent to each other, wherein a union of the several edges extends across the traffic obstruction, and wherein the several edges comprise a first edge on which a tail end of the traffic obstruction is located. The method comprises obtaining, by the processing system, lane-specific speeds for several lanes of each of the several edges, comprising obtaining the lane-specific speeds for at least two different lanes in each of the several edges that have a same driving direction, based at least on probe data of probes along the several edges. The method comprises determining, by the processing system and based at least on the lane-specific speeds, a lane suggestion. Determining the lane suggestion comprises identifying, on the first edge, a lane to be entered that allows passage through the traffic obstruction while minimizing an objective function with a constraint imposed on a number of lane changes while travelling through the traffic obstruction. The method comprises generating output based at least on the lane suggestion.

Various effects and advantages are attained by the method. By determining lane-specific speeds based on probe data and using the lane-specific speeds for performance of a lane-level function, the lane suggestion can be determined in an objective manner, taking into account lane-specific speeds as derived from the probe data. Determination of the lane suggestion with a constraint imposed on the number of lane changes that are allowed while travelling through the traffic obstruction further improves safety, travel time, and/or energy consumption benefits of lane-level functions. Determination of the lane suggestion with a constraint on the number of lane changes that are allowed when determining the lane suggestion can significantly enhance traffic flow and reduce the risk of accidents while also improving energy efficiency. Lane changes can create ripple effects throughout traffic. When multiple drivers attempt to change lanes at once, it causes sudden speed variations and increased congestion. Determination of the lane suggestion with a constraint on the number of lane changes effectively limits the number of lane changes for a vehicle following the lane suggestion, and thereby contributes to maintaining a steadier flow, as vehicles remain in their lanes, promoting smoother traffic movement. This predictability helps maintain a consistent speed and reduces stop- and-go situations, which are common in traffic obstructions. Furthermore, determining the lane suggestion while imposing a constraint on lane changes reduces the likelihood of accidents. Each lane change presents an opportunity for conflict between vehicles, which can lead to collisions. By imposing a constraint on lane changes allowed when determining the lane suggestion, safety is enhanced. Another important effect is the reduction of energy consumption. Frequent lane changes often require vehicles (including the vehicle for which the lane suggestion is determined, but also other vehicles in the traffic obstruction) to accelerate and brake repeatedly, leading to higher fuel consumption and/or a higher consumption of energy stored in a traction battery. By encouraging travel within a single lane or otherwise limiting the number of lane changes allowed, vehicles can maintain steadier speeds, which is more energy-efficient. Thus, the determination of the lane suggestion in the method of performing a lane-level function contributes to attaining a more predictable and steady flow of vehicles, reducing the risk of accidents through fewer conflict points, and enhancing energy efficiency by minimizing the need for frequent acceleration and braking. These cumulative benefits contribute to a safer, more efficient driving environment, especially in congested conditions where the potential for disruption is high.

The constraint may comprise or may be an absence of lane changes while travelling through the traffic obstruction.

Thereby, the lane suggestion is determined such that it minimizes the objective function (which may be representative of or dependent on an expected travel time or energy consumption) while avoiding the drawbacks associated with lane changes in traffic obstructions, such as traffic congestions. The lane suggestion is determined such that it contributes to attaining a more predictable and steady flow of vehicles, reducing the risk of accidents through fewer conflict points, and enhancing energy efficiency by minimizing the need for frequent acceleration and braking. These cumulative benefits contribute to a safer, more efficient driving environment, especially in congested conditions where the potential for disruption is high.

The constraint may be such that a number of lane changes permitted when determining the lane suggestion is less than (e.g., at most 0.5 times or at most 0.4 times or at most 0.3 times) a number of edges included in the several edges.

Thereby, the lane suggestion is determined such that it discourages lane changes during passage through the traffic obstruction. By determining the lane suggestion while limiting the number of lane changes allowed, vehicles can maintain steadier speeds, which is more energy-efficient. Thus, the determination of the lane suggestion in the method of performing a lane-level function contributes to attaining a more predictable and steady flow of vehicles, reducing the risk of accidents through fewer conflict points, and enhancing energy efficiency by minimizing the need for frequent acceleration and braking.

The constraint may be dependent on a length of the traffic obstruction.

Thereby, the lane suggestion is determined in a manner that allows a further reduction in the objective function (e.g., travel time and/or energy consumption required for traversal of the traffic obstruction), while still limiting the number of lane changes permitted when determining the lane suggestion by identifying the lane to be entered.

The constraint may be dependent on a sum of lengths of the several edges.

Thereby, the lane suggestion is determined in a manner that allows a further reduction in the objective function (e.g., travel time and/or energy consumption expected for traversal of the traffic obstruction), while still limiting the number of lane changes permitted when determining the lane suggestion by identifying the lane to be entered. The constraint is dependent on an obstruction length, thereby permitting a certain number of lane changes per unit length of the obstruction (e.g., per 1 km or per 10 km of obstruction length).

The constraint may be dependent on a sum of lengths of the several edges and may be independent of a number of the several edges.

Thereby, the lane suggestion is determined in a manner that allows a further reduction in the objective function (e.g., travel time and/or energy consumption expected for traversal of the traffic obstruction), while still limiting the number of lane changes permitted when determining the lane suggestion by identifying the lane to be entered. When the constraint is dependent on an obstruction length, the determination of the lane suggestion allows a certain number of lane changes per unit length of the obstruction (e.g., per 1 km or per 10 km of obstruction length). In this case, the allowed number of lane changes does not scale with the number of the several edges in a manner that would be independent of the overall length.

The objective function may be dependent on a travel time estimate for passing through the traffic obstruction for passing through the traffic obstruction.

Thereby, the lane suggestion may be determined in a manner that is of particular relevance for lane-level guidance, lane-level driver assistance, and/or lane-level autonomous driving functions. For illustration, the method may determine the lane suggestion in a manner which optimizes or otherwise reduces the expected travel time, while constraining the number of lane changes allowed in the identification of the lane suggestion to, e.g., zero or a threshold that may be dependent on a length of the traffic obstruction.

The objective function may be dependent on an energy consumption estimate for passing through the traffic obstruction for passing through the traffic obstruction.

Thereby, the lane suggestion may be determined in a manner that is of particular relevance for lane-level guidance, lane-level driver assistance, and/or lane-level autonomous driving functions. For illustration, the method may determine the lane suggestion in a manner which optimizes or reduces the expected energy consumption, or a weighted sum of the expected travel time and the expected energy consumption, while constraining the number of lane changes allowed in the identification of the lane suggestion to, e.g., zero or a threshold that may be dependent on a length of the traffic obstruction.

The objective function may be dependent on both a travel time estimate and an energy consumption estimate for passing through the traffic obstruction for passing through the traffic obstruction.

Thereby, the lane suggestion may be determined in a manner that is of particular relevance for lane-level guidance, lane-level driver assistance, and/or lane-level autonomous driving functions. For illustration, the method may determine the lane suggestion in a manner which optimizes or reduces a weighted sum of the expected travel time and the expected energy consumption, while constraining the number of lane changes allowed in the identification of the lane suggestion to, e.g., zero or a threshold that may be dependent on a length of the traffic obstruction.

The processing system may determine the lane suggestion further based on lane continuity data that specifies, for each of several first lanes of one of the several edges, an associated second lane of an adjacent one of the several edges into which the respective first lane continues.

Thereby, the processing system uses, for determining the lane suggestion, data that specifies how each of the lanes in one of the several edges continues into lanes of an adjacent one of the several edges. Such lane continuity data provides information on a path or several paths through the traffic obstruction, which does not or which do not involve any lane changes, for example. The processing system can thereby determine, in an efficient and reliable manner, which lane is to be entered so as to allow passage through the traffic obstruction without any lane changes (or while limiting the number of lane changes). The lane suggestion may be determined so as to minimize the expected travel time, the expected energy consumption, or a weighted sum of the expected travel time and the expected energy consumption.

The processing system may retrieve or derive the lane continuity data based on electronic map data and/or the probe data.

Thereby, lane continuity data that specifies how a vehicle travels from any one of the several edges to an adjacent one of the several edges along a vehicle travel direction is obtainable by the processing system.

The method may further comprise determining, by the processing system, the lane continuity data based on electronic map data.

Thereby, lane continuity data that specifies how a vehicle travels from any one of the several edges to an adjacent one of the several edges along a vehicle travel direction is obtainable by the processing system.

The method may further comprise determining, by the processing system, the lane continuity data based on the electronic map data using heuristics.

Thereby, the processing system can use heuristics to determine which lane of an edge continues into which lane(s) of an adjacent edge. The lane continuity data can, thus, be determined automatically even when the electronic map data provides information on a number of lanes only, without specifying how lanes of one edge continue into lanes of an adjacent edge.

The processing system may determine the lane-continuity data based at least on a location of the several edges relative to one or several road junctions.

Thereby, the processing system can use heuristics to determine which lane of an edge continues into which lane(s) of an adjacent edge, with the heuristics being particularly useful before and/or after a road junction.

Obtaining the lane-specific speeds may comprise determining the lane-specific speeds based at least on lateral probe positions (e.g., determined relative to a road boundary or road center) comprised by the probe data.

Thereby, the processing system can determine the lane-specific speeds based on at least position data (such as GNSS-based position data) included in the probe data. Probe-specific speeds can be derived from the position data or may be included as data element in the probe data. Thus, the lane suggestion is determined based on objective observations as processed by the processing system.

Obtaining the lane-specific speeds may comprise: assigning probes to lanes based on location data included in the probe data and based on data specifying, for each of the several edges, a lane count and lane widths for the respective edge; and determining, for each of the several edges and each of the several edges, the lane-specific speeds based on probe speeds for probes assigned to the several lanes of the several edges.

Thereby, the lane-specific speeds may be determined using an ensemble technique, utilizing the probe data from probes on the several edges.

Obtaining the lane-specific speeds may comprise determining the lane-specific speeds independently for each of the several edges.

Thereby, the lane-specific speeds may be determined using an ensemble technique, utilizing the probe data from probes on the several edges.

Obtaining the lane-specific speeds may comprise retrieving, for each of the several edges, the number of lanes and the lane widths from the electronic map data, and using the number of lanes and the lane widths to assign probes to the several lanes to identify which probes on one of the several edges are located on which of the several lanes of the one of the several edges.

Thereby, probe speeds may be associated with different lanes in an efficient manner.

The electronic map data may store each of the several edges as a data structure that specifies a pair of nodes at opposite ends of the edge. The electronic map data may store each the number of lanes as a relation that specifies, for an edge of the several edges, the number of lanes and includes a reference to the edge having the number of lanes. The electronic map data may store lane widths as a further relation that specifies, for an edge of the several edges, the lane widths and includes a reference to the edge having the lane widths.

Thereby, data required for associating probe speeds with different lanes when employing a lateral probe position based technique can be obtained in an efficient manner, while affording ease of access (both for read and write access) of the electronic map data.

The probe data may be anonymized probe data (e.g., obfuscated data) that do not allow conclusions to be drawn on an identity of a user of a probe or a vehicle in which the probe is provided.

Thereby, data privacy is ensured while providing the lane suggestion to implement a lane-level function.

Obtaining the lane specific speeds may comprise: determining, for each of the several edges, lane positions based at least on the lateral probe positions (e.g., a lateral road centerline distance that indicates the distance from the road centerline measured in a direction perpendicular to the road centerline); performing a lane assignment that assigns probes to lanes based at least on the probe positions and the lane positions; and determining the lane-specific speeds based at least on the lane assignment and probe speeds along the edge extension direction.

Thereby, the processing system can determine the lane-specific speeds based on at least position data (such as GNSS-based position data) included in the probe data. Probe-specific speeds can be derived from the position data or may be included as data element in the probe data. Thus, the lane suggestion is determined based on objective observations as processed by the processing system.

Alternatively or additionally to applying a lateral probe position based technique, obtaining the lane-specific speeds may comprise determining the lane-specific speeds based at least on a statistical analysis of probe speeds.

Thereby, the processing system can determine the lane-specific speeds by, e.g., clustering probe speeds per edge. Probe-specific speeds can be derived from position data in the probe data or may be included as data element in the probe data. Thus, the lane suggestion can be determined based on objective observations as processed by the processing system, in combination with a cluster analysis of probe speeds.

Determining the lane positions may comprise identifying, based at least on the probe positions, a probe position distribution of probe positions along the transverse direction.

Thereby, the processing system can determine the lane-specific speeds in a data-based manner.

The lane positions may be determined based at least on tails of the probe position distribution.

Thereby, the processing system can determine lane-specific speeds for outermost lanes (left and right) in a particularly robust manner based on the velocities of vehicles assigned to a tale of the probability distribution.

The tails of the probability distribution may correspond to, e.g., at most 30% of the probes, at most 20% of the probes, or at most 15% of the probes.

Thereby, the processing system can determine lane-specific speeds for outermost lanes (left and right) in a particularly robust manner based on the velocities of vehicles assigned to a tale of the probability distribution.

The output may comprise guidance instructions for a vehicle driver or a vehicle control system of a vehicle.

Thereby, the lane suggestion is utilized to provide a suggestion on the lane on which the vehicle is to drive when reaching a tail end of the traffic obstruction.

The output may be generated before the vehicle reaches any one of the several edges.

Thereby, the lane suggestion is utilized to provide a suggestion on the lane on which the vehicle is to drive when reaching a tail end of the traffic obstruction.

The method may further comprise performing, by a vehicle control system, at least one action based at least on the output, the at least one action comprising any one or any combination of: a driver assistance function; an advanced driver assistance function; an autonomous driving function.

Thereby, the lane suggestion is utilized for performance of the at least one control action.

The method may comprise performing, by the vehicle control system, the at least one action based at least on the output before the vehicle reaches any one of the several edges.

Thereby, the lane suggestion is utilized for performance of the at least one control action before the vehicle reaches the traffic obstruction. This is particularly useful to reduce lane changes upon passage of the vehicle through the traffic obstruction while improving vehicle travel, e.g., by reducing travel time while constraining (e.g., preventing) lane changes, by reducing energy consumption while constraining (e.g., preventing) lane changes, and/or by optimizing another objective function that may be of relevance to the vehicle driver or a vehicle control system.

The traffic obstruction may be a traffic jam or another disruption in free vehicle flow.

Thereby, the method provides output based on a lane suggestion useful for passage through the traffic jam or other disruption.

The lane-level function may comprise one, several, or all of: route search or route guidance; identification of incorrect lane data in an electronic map; identification of maintenance work; traffic flow control; deployment of map updates.

Thereby, the lane suggestion can be used for performing one or several lane level traffic-based functions, based at least on the lane-level specific data.

The method may further comprise performing the at least one lane-level function.

Thereby, the lane suggestion can be used for performing one or several lane level traffic-based functions, based at least on the lane-level specific data.

According to another aspect of the invention, there is disclosed machine-readable instruction code comprising instructions which, when executed by at least one processing circuit, cause the at least one processing circuit to perform the method of any one aspect or embodiment.

Thereby, the effects discussed in association with the method are attained.

According to another aspect of the invention, there is disclosed a data carrier comprising machine-readable instruction code comprising instructions which, when executed by at least one processing circuit, cause the at least one processing circuit to perform the method of any one aspect or embodiment.

The data carrier may comprise a non-transitory storage medium having stored thereon the machine-readable instruction code.

Thereby, the effects discussed in association with the method are attained.

According to a further aspect, there is disclosed a processing system for performance of a lane-level function. The processing system comprises at least one interface operative to receive probe data. The processing system comprises at least one processing circuit. The at least one processing circuit is operative to: identify a traffic obstruction in a navigable network; determine several edges of the navigable network along which the traffic obstruction extends, the several edges being adjacent to each other, a union of the several edges extending across the traffic obstruction, and the several edges comprising a first edge on which a tail end of the traffic obstruction is located; obtain lane-specific speeds for several lanes of each of the several edges, the at least one processing circuit being operative to obtain the lane-specific speeds for at least two different lanes in each of the several edges that have a same driving direction, based at least on the probe data of probes along the several edges; determine, based at least on the lane-specific speeds, a lane suggestion by identifying, on the first edge, a lane to be entered that allows passage through the traffic obstruction while minimizing an objective function with a constraint imposed on a number of lane changes while travelling through the traffic obstruction; and control the at least one interface to generate output based at least on the lane suggestion.

Various effects and advantages are attained by the processing system. The processing system is operative to determine lane-specific speeds based on probe data and use the lane-specific speeds for performance of a lane-level function. Thereby, the processing system is operative to determine the lane suggestion can be determined in an objective manner, taking into account lane-specific speeds as derived from the probe data. The processing system is operative such that determination of the lane suggestion is performed with a constraint imposed on the number of lane changes that are allowed while travelling through the traffic obstruction. Thereby, the processing system is operative to further improve safety, travel time, and/or energy consumption benefits of lane-level functions. Determination of the lane suggestion with a constraint on the number of lane changes that are allowed when determining the lane suggestion can significantly enhance traffic flow and reduce the risk of accidents while also improving energy efficiency. Lane changes can create ripple effects throughout traffic. When multiple drivers attempt to change lanes at once, it causes sudden speed variations and increased congestion. Determination of the lane suggestion with a constraint on the number of lane changes effectively limits the number of lane changes for a vehicle following the lane suggestion, and thereby contributes to maintaining a steadier flow, as vehicles remain in their lanes, promoting smoother traffic movement. This predictability helps maintain a consistent speed and reduces stop- and-go situations, which are common in traffic obstructions. Furthermore, determining the lane suggestion while imposing a constraint on lane changes reduces the likelihood of accidents. Each lane change presents an opportunity for conflict between vehicles, which can lead to collisions. By imposing a constraint on lane changes allowed when determining the lane suggestion, safety is enhanced. Another important effect is the reduction of energy consumption. Frequent lane changes often require vehicles (including the vehicle for which the lane suggestion is determined, but also other vehicles in the traffic obstruction) to accelerate and brake repeatedly, leading to higher fuel consumption and/or a higher consumption of energy stored in a traction battery. By encouraging travel within a single lane or otherwise limiting the number of lane changes allowed, vehicles can maintain steadier speeds, which is more energy-efficient. Thus, the processing system is operative such that the determination of the lane suggestion contributes to attaining a more predictable and steady flow of vehicles, reducing the risk of accidents through fewer conflict points, and enhancing energy efficiency by minimizing the need for frequent acceleration and braking. These cumulative benefits contribute to a safer, more efficient driving environment, especially in congested conditions where the potential for disruption is high.

The processing system may be operative to perform the method according to any aspect or embodiment disclosed herein.

Optional features of the processing system and the features respectively attained thereby may correspond to the features and effects described in association with the method.

According to a further aspect of the invention, there is disclosed a probe comprising: a global navigation satellite system (GNSS) device operative to determine GNSS-based location data; at least one probe data interface; and at least one probe processing circuit operative to: control the at least probe data interface to transmit probe data comprising the GNSS-based location data to the processing system according to an aspect or embodiment; receive, via the at least one probe data interface, data that comprises or is based at least on the output of the processing system; and perform at least one control action based at least on the data received at the at least one probe data interface.

The probe is specifically configured for interaction with the processing system according to an aspect or embodiment.

The probe may be operative such that the at least one control action comprises a human machine interface (HMI) control action to provide lane-level guidance based at least on the data received at the at least one probe data interface.

Thereby, the lane suggestion can be used for guiding a vehicle to a lane, prior to reaching a traffic obstruction, which allows the vehicle to travel through the traffic obstruction so as to optimize travel time and/or energy consumption, without requiring any lane changes while travelling through the traffic obstruction, or while otherwise constraining lane changes.

According to a further aspect, there is disclosed a vehicle comprising the probe. The vehicle may be operative to perform at least one actuator control action based at least on the data received at the at least one probe data interface.

Thereby, the lane suggestion can be used for a control action (such as a lane change action), prior to reaching a traffic obstruction, which allows the vehicle to travel through the traffic obstruction so as to optimize travel time and/or energy consumption, without requiring any lane changes while travelling through the traffic obstruction, or while otherwise constraining lane changes.

According to a further aspect, there is disclosed a system comprising the processing system and at least one device (such as at least one probe which may be included in the plurality of probes or which may be separate therefrom, or another vehicle component such as an ADAS and/or autonomous driving system) operative to receive the output and provide guidance instructions for a vehicle driver or a vehicle system of a vehicle before the vehicle reaches the several edges.

Thereby, the processing system and the at least one device facilitate traversal of the traffic obstruction in a manner which provides advantages with regard to traffic flow, travel time, and/or energy consumption.

While the techniques disclosed herein may be used for navigation, driver assistance, ADAS, and autonomous driving functions, they are not limited thereto.

## BRIEF DESCRIPTION OF THE DRAWINGS

Embodiments of the invention will be described with reference to the drawings in which similar or corresponding reference signs designate elements having similar or corresponding configuration and/or function.

Fig. 1 is a schematic representation of a processing system operative to perform a method of processing probe data for performance of a lane-level function.
Fig. 2 is a schematic representation to illustrate operation of the processing system.
Fig. 3 is a schematic representation of a traffic obstruction extending over several edges of a navigable network.

Fig. 4 is a schematic representation of a further traffic obstruction extending over several edges of a navigable network.

Fig. 5 is a schematic representation of another traffic obstruction extending over several edges of a navigable network.

Fig. 6 is a schematic representation of at least one processing circuit of the processing system.

Fig. 7 is a schematic representation of probe data and speeds derived therefrom.

Fig. 8 is a schematic representation of further probe data and speeds derived therefrom.

Fig. 9 is a schematic representation of a portion of a navigable network.

Fig. 10 is a flow chart of a method.

Fig. 11 is a flow chart of a process that can be performed in the method of Fig. 10.

Fig. 12 is a flow chart of a method.

Fig. 13 is a flow chart of a method.

Fig. 14 is a schematic representation of a system comprising a plurality of probes and a processing system operative to perform a method of processing probe data for performance of a lane-level function.

Fig. 15 is a schematic representation of a human-machine interface that is controlled based at least on the output of the processing system.

Fig. 16 is a flow chart of a method.

DETAILED DESCRIPTION OF EMBODIMENTS

Embodiments of the invention will be described in detail. While some embodiments will be described in association with specific exemplary lane arrangements, the embodiments are not limited thereto.

The features of embodiments may be combined with each other unless specifically stated otherwise.

Methods, processing systems, and devices according to embodiments are operative to provide lane-level functions useful in association with traffic obstructions, such as traffic jams, on multi-lane roads having several lanes with a same driving direction. When reaching a tail end of such as traffic obstruction, it is impossible or challenging to determine which lane should be chosen to optimize passage through the traffic obstruction (with optimality being defined based at least on an objective criterion, such as expected travel time, expected energy consumption, and/or a weighted sum of expected travel time and expected energy consumption). The methods, processing systems, and devices are operative to provide a lane suggestion based at least on objective criteria. The methods, processing systems, and devices are operative to determine the lane suggestion such that it contributes to overall traffic flow, reduces the risk of traffic jam buildup, and/or contributes to reducing overall energy consumption for vehicles in the traffic obstruction by determining the lane suggestion such that it mitigates the risk of energy-costly braking and/or acceleration processes having to be performed by numerous vehicles.

The methods, processing systems, and devices may be operative to determine the lane suggestion such that it provides the shortest expected travel time (i.e., fastest lane) and/or the lowest energy consumption without any lane changes being performed while driving through the traffic obstruction, or while otherwise constraining the number of lane changes allowed for determining the lane suggestion. Thereby, the methods, processing systems, and devices contribute to reducing the travel time for the vehicle for which the lane suggestion is determined. For the individual driver this has the advantage that the drive may be less stressful and less dangerous alleviating the purported need to switch lanes in a traffic incident. But also for the traffic in general, the methods, processing systems, and devices provide the effect that the capacities of the individual lanes of a road will be used more evenly. If there is a fastest lane in an incident, then drivers conventionally do not utilize the several lanes in an optimal manner, eventually delaying the resolution of the traffic obstruction. The methods, processing systems, and devices provide lane suggestions that help dissolve the traffic obstruction and/or that reduce overall energy consumption, thereby contributing to more energy-efficient transportation, which is desirable with a view to reducing greenhouse emissions.

The techniques disclosed herein in detail are operative to process probe data to determine the lane suggestion prior to a vehicle entering into a traffic obstruction, such as a traffic jam. Thus, the techniques disclosed herein take advantage of the fact that probe speeds of probes travelling on a navigable network can generally be determined with good accuracy, with GNSS-based positions being useful to facilitate a probe lane assignment.

As used herein, the term "probe" encompasses a navigation device but need not be limited thereto. Probe data may indicate probe traces also for devices that perform a navigation-related function and/or for devices that do not perform navigation-related functions. A probe may be an in-dashboard navigation device, a portable navigation device (PND), a mobile terminal (MT) of a cellular communication network (e.g., a smartphone) that may (but does not need to) perform a navigation-related operation, without being limited thereto. As used herein, a "probe" may in particular be a probe that is fixedly or removably provided in a vehicle, so as to move jointly with the vehicle. Thus, a "probe position" is indicative of a vehicle position, and/or a "probe speed" is indicative of a vehicle speed. These terms may be interchanged, unless explicitly stated otherwise.

The term "navigation device" as used herein encompasses an in-dashboard navigation device, a portable navigation device (PND), a mobile terminal (MT) of a cellular communication network that performs a navigation-related function, such as a smartphone, without being limited thereto.

As used herein, a "lane-level function" refers to a function that takes into account that conditions can be different for different lanes adjacent to each other on a same edge of the navigable network. The different conditions may comprise dynamic lane conditions, such as lane-level specific speeds or speed variances. The techniques disclosed herein are operative to use lane-specific data, namely lane specific speeds for several edges of a navigable network, to determine the lane suggestion. Identifying a lane suggestion for a lane at which a vehicle should be positioned when reaching a tail end of a traffic obstruction is an example for a lane-level function. Other examples include: enabling or performing lane level guidance based at least on the lane suggestion; enabling or performing a vehicle system control operation (such as a lane selection for lane keeping) based at least on the lane suggestion; or other lane-level functions that can be dependent on the lane suggestion.

As used herein, an "edge" of the navigable network is a connection between nodes of the navigable network that represents a real-world pathway along which a vehicle (such as a car or electric bicycle) can travel. Terms such as "link" or "segment of a navigable network" are other terms used in the art to refer to an edge of the navigable network. The term edge encompasses a road segment, without being limited thereto. For illustration, the term edge may also encompass ferry connections. The edge may be defined in electronic map data by at least two nodes, which in turn may be defined in the electronic map data by their geospatial coordinates (such as latitude and longitude, without being limited thereto). In case of an electronic map that includes road definitions that can include more than two nodes, the techniques disclosed herein are applicable to any edge of such a road between two adjacent nodes of the road definition.

As used herein, a "first edge" of several edges refers to an edge on which a tail end of a traffic obstructions is located for a driving direction in which the traffic obstruction exists. In other words, the first edge is the one of the several edges at which a vehicle driving along the driving direction encounters the traffic obstruction for the first time. The techniques disclosed herein will be described with reference to a driving direction. If there are concurrent traffic obstructions for both opposing driving directions, the techniques may respectively performed independently for each of the two opposite driving directions.

As used herein, several "lanes" of an edge refer to lanes having a same driving direction. Such multi-lane edges in which there are several lanes with a same driving direction may be present on highways, without being limited thereto.

As used herein, an "extension direction" of an edge refers to the direction along which the edge extends. In case of an electronic map that includes road definitions that can include more than two nodes, the techniques disclosed herein are applicable to any edge of such a road between two adjacent nodes of the road definition, which extends along a straight extension direction.

As used herein, a "direction transverse to the extension direction of the edge" refers to a direction that extends transverse (optionally perpendicular) to the extension direction. This direction is also referred to as "lateral" (as it is the left-right direction from the perspective of a vehicle driving along the extension direction on the edge).

As used herein, a "lane assignment" refers to assigning a probe to a lane.

As used herein, "GNSS-based position data" or "GNSS-based location data" may comprise, for example, global positioning system (GPS)-based position data, such as a GPS fix, several GPS fixes, or a GPS trajectory.

As used herein, a "lateral probe position" refers to a shift of a GNSS-based position (e.g., a GPS fix) in the lateral direction, i.e., transverse (e.g., perpendicular) to the line defined by the nodes included in the definition of the edge. The lateral probe position may be determined as a distance of the probe relative to (e.g., as a distance measured from) a road centerline, a road boundary, a lane boundary, or another line that is colinear to the line defined by the node(s) included in the definition of the edge. The distance is measured perpendicularly to the line defined by the node(s) included in the definition of the edge.

As used herein, a "traffic obstruction" on a road having several lanes refers to a situation in which free flow of traffic is impeded, resulting in lane-dependent speeds that are each smaller (e.g., 0.8 times or less, or 0.5 times or less) than a speed limit applicable at the respective location in the navigable network.

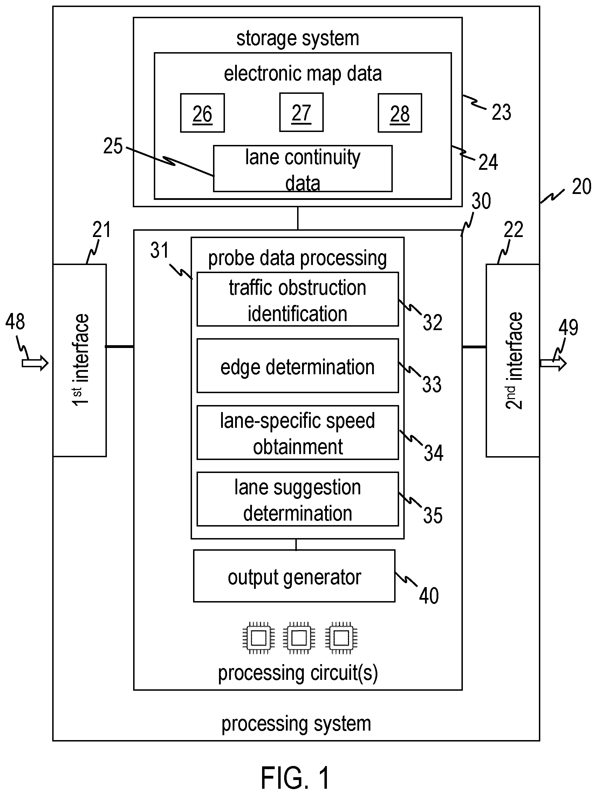

Fig. 1 is a schematic representation of a processing system 20 operative to process probe data for performance of a lane-level function. The processing system 20 is operative to determine a lane suggestion for passage through a travel obstruction that extends across several edges of a navigable network, each having several lanes. The processing system 20 is operative to determine the lane suggestion that allows the passage through the traffic obstruction with minimum travel time and/or minimum energy consumption, with the lane suggestion being determined with a constraint being imposed on the number of lane changes (e.g., by prohibiting any lane changes when determining the lane suggestion).

The processing system 20 comprises at least one interface 21, 22. The at least one interface 21 is operative to receive probe data 48 from a plurality of probes. The probe data 48 comprises GNSS-based position data (such as GPS fixes and/or GPS traces). The probe data 48 may include probe speed data separate from the GNSS-based position data, even though this is optional.

The processing system 20 comprises a storage system 23 or is operative to communicatively interface with a storage system 23 that has stored therein electronic map data 24. The electronic map data 24 defines a navigable network.

The electronic map data 24 comprises base layer data 26, 27. The base layer data 26 comprise node data 26 defining nodes of the navigable network. The base layer data 26, 27 further comprises edge data 27 defining edges of the navigable network. The edge data 27 may define a plurality of edges, respectively by referencing nodes defined by the node data 26. Such a structure provides various effects, such as ease of adaptability when coordinates of a node need to be updated. Thus, the navigable network defined by the base layer data 26, 27 comprises nodes and edges extending between at least two nodes. The electronic map data may comprise lane data 28 useful in performance of lane-level functions. The lane data 28 may specify, at least for each of several edges along which the traffic obstruction extends, a lane count and lane widths. The lane data 28 may be provided as relations that respectively include an identifier for an associated edge defined by the edge data 27. The lane data 28 may further comprise data specifying the lane count and/or lane widths for the respective edge. A different relation may be provided for each of the several edges to define the lane count and lane widths.

The processing system 20 comprises at least one processing circuit 30 operative to process the probe data 48. The at least one processing circuit 30 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto, to perform the operations discussed in detail herein.

The at least one processing circuit 30 is operative to perform a probe data processing 31 to determine a lane suggestion, based at least on the received probe data 48. The at least one processing circuit 30 is operative such that the probe data processing 31 comprises a traffic obstruction identification 32 to identify a traffic obstruction that extends over several edges of the navigable network. The traffic obstruction identification 32 may be operative to identify the traffic obstruction based at least on probe speeds obtained from the probe data 48 (e.g., by retrieval of probe speeds included in the probe data 48 and/or by computing the probe speeds based at least on GPS fixes and/or based at least on GPS traces) for probes located on an edge of the navigable network. The probe data processing 31 comprises an edge determination 33 to determine several edges of the navigable network that are immediately adjacent each other, with the traffic obstruction extending through the several edges (such that the first and last one of the several edges, taken along the driving direction, respectively overlap with the traffic obstruction, but each have one adjacent edge that does not overlap with the traffic obstruction). Determining the several edges may comprise identifying, based at least on probe position data of probes located within the traffic obstruction identified by the traffic obstruction identification 32, the several edges that are adjacent each other and each overlap with the traffic obstruction. The at least one processing circuit 30 may be operative to perform a lane-specific speed determination 34 to obtain lane-specific speeds for each of several lanes of each of the several edges across which the traffic obstruction extends. The lane-specific speed determination 34 may be operative to determine the lane-specific speeds, for each of the several edges. The lane-specific speed determination 34 may be operative to determine the lane-specific speeds based on speed statistics, e.g., from an average, median or mean of probe speeds determined to be located on the respective lane of the respective edge. The lane-specific speed determination 34 may be operative to determine the lane-specific speeds using statistical analysis, (heuristic) processing techniques or machine learning (ML) techniques. The lane-specific speed determination 34 may be operative to determine the lane-specific speeds independently for each of the several edges (i.e., in such a manner that the speed determination in one of the several segments is independent of the speed determination in all other ones of the several segments). In other implementations, the lane-specific speed determination 34 may be operative to take into consideration upstream and/or downstream behavior (e.g., speeds) of probes. Examples include: Determining the lane-specific speed based on whether the probe comes from a certain maneuver or any one from a set of certain maneuvers (e.g., left or right turn); or whether the probe performs a certain maneuver or any one from a set of certain maneuvers (e.g., left or right turn) later on. Other extensions are possible. The probe data processing 31 may access and use the lane data 28 of the electronic map data to assign probes to lanes.

The at least one processing circuit 30 is operative to perform a lane suggestion determination 35 to determine a lane suggestion. The lane suggestion determination 35 determines the lane suggestion such that it provides a lane to be entered on the one of the several edges that a vehicle will encounter first (referred to as first edge) when reaching the tail end of the traffic obstruction. The lane to be entered is determined by means of a constrained optimization, namely by optimizing an objective function (which may be indicative of an expected travel time, an expected energy consumption, a weighted sum of the expected travel time and the expected energy consumption, or another optimization objective) with a constraint imposed on lane changes. The constraint may be absence of lane changes. The constraint may be relaxed depending on a length of the traffic obstruction, e.g., by selectively allowing one lane change depending on the length of the traffic obstruction, or by allowing a number of lane changes that depends on the length of the traffic obstruction. To perform the lane suggestion determination 35, the at least one processing circuit uses lane continuity data 25 that specifies, for any lane of one edge of the several edges over which the traffic obstruction extends, into which lane(s) of an immediately adjacent edge the respective lane extends. The lane continuity data 25 may be stored in the electronic map data 24, e.g., as a relation for edges. Alternatively or additionally, the processing system 20 may be operative to determine the lane continuity data 25 based at least on the lane counts stored in the lane data 28 and, when there is a change in lane count from one edge to a next edge of the several edges, by applying logical rules (e.g., heuristics) to determine how lanes in adjacent edges connect to each other.

The at least one processing circuit 30 is operative to implement an output generator 40 to cause output 49 to be provided for performance of the lane-level function. The at least one processing circuit 30 is operative to cause the output 49 to be generated based at least on the lane suggestion. The at least one processing circuit 30 may be operative to cause the output 49 to be provided via the interface 21 or a second interface 22 separate from the interface 21. The output generator 40 may generate the output 49 based at least on the lane suggestion determined by the probe data processing 31.

The processing system 20 may be operative to perform the determination of the lane suggestion for each of several traffic obstructions detected in the navigable network, for use in performing the at least one lane-level function. Thus, the processing system 20 may be operative to perform the various operations discussed herein for each of a plurality of traffic obstructions in the navigable network data. However, the determination of lane suggestion need not be performed for each traffic obstruction on multi-lane roads (such as highways) in the navigable network.

The at least one processing circuit 30 may be operative such that the output 49 comprises, for each of a plurality of edges of the navigable network, lane-specific data that comprises or is otherwise based at least on the one or several lane-specific speed characteristics. For illustration, and as will be explained in more detail herein, the at least one processing circuit 30 may be operative to determine the one or several lane-specific speed characteristics, use the one or several lane-specific speed characteristics to improve a lane assignment of probes to lanes, and then determine lane-specific additional lane-specific data based at least on this improved assignment. In this case, the output 49 may comprise the lane-specific one or several lane-specific speed characteristics, which are useful for performing functions such as lane level traffic-based route search and/or route guidance, lane level traffic-based cruise control and/or lane keeping assistance, a lane level traffic-based ADAS function, and/or a lane level traffic-based autonomous driving function. The output 49 may optionally comprise additional information that is determined by the processing system 20 based at least on the one or several lane-specific speed characteristics, such as information on changes in lane geometry (such as a change in lane count as compared to the electronic map data).

The processing system 20 may be implemented as a distributed processing system. For illustration, some of the functions of the at least one processing circuit 30 may be implemented centrally on a server or other computing device, while other may be implemented by another processing circuit installed locally in a probe, e.g., in a navigation device, or otherwise in a vehicle. For illustration, the processing system 20 may be operative such that the identification of the traffic obstruction, the edges over which the traffic obstruction extends, and the determination of the lane-specific speeds is performed by processing circuit(s) of at least one server. The processing system 20 may be operative such that the determination of the lane suggestion and the generation of the output are performed by at least one additional processing circuit of a probe, e.g., of a navigation device, or of another vehicle system.

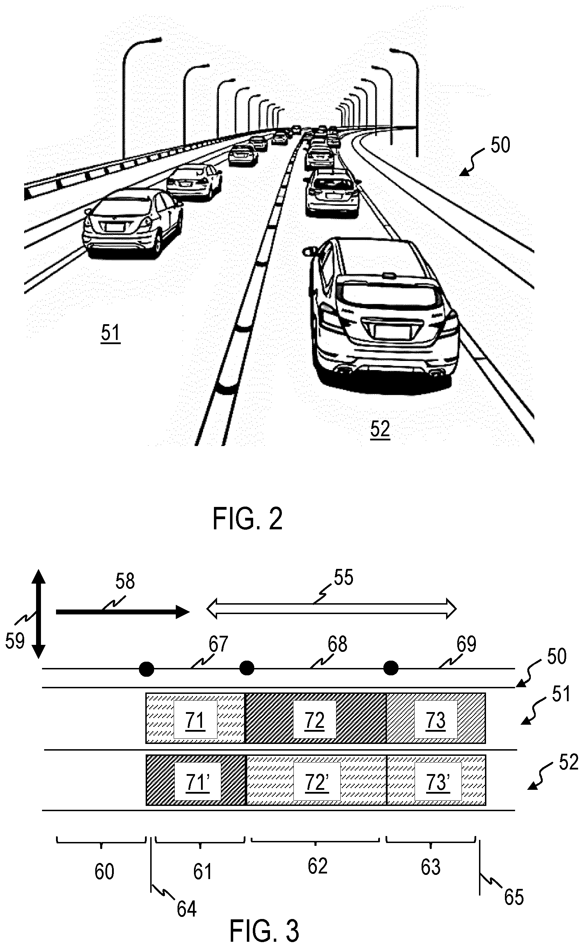

Operation of the techniques disclosed herein will be explained further with reference to an exemplary scenario illustrated in Fig. 2 to Fig. 16.

Fig. 2 shows an exemplary scenario in which a road 50 (part of which is represented by an edge of the navigable network defined by the electronic map data) has several lanes 51, 52 for a same driving direction. The several lanes 51, 52 are offset from each other along a lateral direction transverse (e.g., perpendicular) to an extension direction of the edge. A traffic obstruction on the road 50 makes it challenging and in many cases even impossible for a driver to determine, when reaching a tail end of the traffic obstruction (i.e., the end at which the vehicle arrives first when driving towards the traffic obstruction), which lane should be chosen to attain a certain objective. The processing system 20 and method provide an automatic determination of a lane suggestion that attains an objective (such as minimizing travel time and/or energy consumption during traversal of the traffic obstruction) while contributing to the dissolution of the traffic obstruction and to a reduction in energy consumption of other vehicles.

To this end, the processing system 20 is operative to determine the lane suggestion by means of a constrained optimization, in which the lane to be entered on the edge at which the vehicle enters the traffic obstruction is determined as the lane for which an objective function (which may be indicative of an estimated travel time, energy consumption, weighted sum thereof, or another objective) is optimized (e.g., minimized) while constraining the number of lane changes. For illustration, the lane suggestion may be determined by the processing system under the constraint that no lane changes be made during traversal of the traffic obstruction. In other implementations, the lane suggestion may be determined by the processing system under the constraint that the number of lane changes is not greater than a threshold. The threshold may be dependent on a sum of lengths of the several edges. The constraint may be imposed as a hard constraint or as a soft constraint in the optimization performed by the processing system 20.

The constrained optimization is performed taking into consideration how lanes of any edge overlapping with the traffic obstruction continue into lanes of any adjacent edge that also overlaps with the traffic obstruction. This data, also referred to as lane continuity data, may be stored in the electronic map data, may be derived based at least on probe data, and/or may be derived from data specifying the navigable network topology in combination with the lane count stored, both of which are included in the electronic map data.

Fig. 3 is a schematic plan view of the road 50 that is a multi-lane road having several lanes 51, 52 for a same driving direction. A traffic obstruction 55, such as a traffic jam, overlaps several edges 67, 68, 69 of the navigable network that represents that navigable roads and other navigable connections (such as ferry connections). The several edges 67, 68, 69 are determined by the processing system such that the union of the several edges 67, 68, 69 fully covers the traffic obstruction 55. In other words, the several edges 67, 68, 69 are the set of all edges that overlap with the traffic obstruction 55. While the several edges 67, 68, 69 are schematically illustrated as being colinear, the several edges 67, 68, 69 do not need to be colinear, and at least one of the several edges can be angled to at least one of its adjacent edges. I.e., the first one of the several edges (the first edge 67) has the tail end of the traffic obstruction arranged thereon, and the last one of the several edges (the last edge 69) is the edge on which the traffic obstruction stops impeding traffic. The several edges 67, 68, 69 may comprise one or more edges in which there are physical barriers between at least two of the lanes, making a passage between lanes impossible. The several edges 67, 68, 69 may comprise one or more edges on which at least one lane is re-routed (possibly even to an area that is conventionally reserved for traffic in the opposite driving direction). The edges respectively have an extension direction 58 that is determined by the start and end nodes of the edge. The edges have a lateral direction 59 that is transverse to, e.g., perpendicular to, the extension direction 58 in a map plane of the electronic map data.

The processing system 20 is operative to determine lane-specific speeds 71, 71', 72, 72', 73, 73' for each of the several edges 67, 68, 69 and each of the various lanes of each of the several edges 67, 68, 69. The processing system 20 is operative to process probe data comprising probe position to determine the lane-specific speeds for each of the several edges 67, 68, 69. This may be done, e.g., as follows:

- Processing probe positions (e.g., GPS fixes or other GNSS-based position data) included in the probe data to identify probes having a longitudinal position along the road 50 that is assignable to a longitudinal range (such as longitudinal ranges 61, 62, 63) associated with one of the several edges 67, 68, 69.
- Assigning probes determined to be located on one of the several edges 67, 68, 69 to a lane of the respective edge. This may be done in various ways:

  ∘ For illustration, the processing system 20 may determine a lateral probe position (i.e., the probe position transverse to the edge or centerline, along the lateral direction 59) and may use the lateral probe position in combination with lane count and lane width data of the electronic map data to assign a probe to a lane.
  ∘ Alternatively or additionally, the processing system 20 may establish lateral probe position statistics and use them to assign probe to lanes. This provides robustness against incomplete and/or outdated lane width data.
  ∘ Alternatively or additionally, the processing system 20 may determine, for each of the edges 67, 68, 69, respective lateral probe position statistics. Probes may be assigned to lanes based at least one tails of the lateral probe position statistics, e.g., based at least on portions of the lateral probe position statistics that represent a predetermined or configurable percentage (e.g., at most 30% or at most 20% or at most 10%) of vehicles having the largest offset away from a center of the road 50. This provides robustness and facilitates particularly reliable assignment of probes to outermost lanes.
  ∘ Alternatively or additionally, the processing system 20 can perform a statistical analysis of probe speeds (such as speed clustering) to assign probes to lanes. The statistical analysis of probe speeds may be used for both lane assignment and determining the lane-specific speeds. The statistical analysis of probe speeds in combination with map matching may be used to assign probes to lanes.

- Processing probe speeds to determine the lane-specific speeds. This may be done in various ways, e.g.:

  ∘ determining an average speed of probes located on the respective lane within the respective edge, with the average being determined over a monitoring time horizon;
  ∘ determining a median speed of probes located on the respective lane within the respective edge, with the average being determined over a monitoring time horizon;
  ∘ determining speed statistics of probes located on the respective lane within the respective edge, with the average being determined over a monitoring time horizon, and determining the lane-specific speed based at least on the speed statistics.

Thereby, the processing system 20 can determine the lane-specific speeds for each of the edges 67, 68, 69, the lane specific speeds comprising at least two speeds 71, 71' for one of the several edges, and at least two speeds 72, 72', 73, 73' for each other one of the several edges.

To determine the lane suggestion as a constrained optimum, with the constraint limiting the number of lane changes, the processing system 20 may determine the lane to be entered on the edge 67 that contains the tail end of the traffic obstruction 55 (i.e., the end to which a vehicle will run up). Referring to a case in which no lane changes are allowed, the processing system 20 may determine a lane on which the vehicle should travel on the first edge 67 so as to find a lane to be entered on the first edge 67 (i.e., the one reached first by a vehicle) overlapping with the traffic obstruction and that minimizes an objective function

$$C = \sum_{i=1}^{N} C_i(y_i) \qquad (1)$$

where: C is the objective function; N designates a number of edges overlapping with the traffic obstruction such that a union of the several edges fully covers the traffic obstruction; $C_i(\cdot)$ denotes the objective function contribution (such as a travel time estimate and/or energy consumption estimate) for the $i^{th}$ edge; and $y_i$ denotes a lane choice. The values of $y_i$ are selected from a finite set including a number of distinct values corresponding to the number of lanes of $i^{th}$ edge (e.g., two, three, four, or five different values).

The optimum lane is identified in a constrained optimization that minimizes the objective function C under a constraint that imposes a limitation on a number of lane changes that are allowed. For illustration, the constraint may be a hard constraint requiring that, for i = 1, ..., N - 1, the lane in the (i + 1)$^{st}$ edge, $y_{i+1}$, is a lane into which the lane $y_i$ in the $i^{th}$ edge continues. Thus, the processing system may determine the value of $y_1$ (i.e., of the lane on which is the vehicle is to drive on the one of the several edges that is reached first by the vehicle) such that Eq. (1) has its minimum value when, for any i = 1, ... , N - 1, the lane in the (i + 1)$^{st}$ edge is respectively a lane into which the lane $y_i$ in the $i^{th}$ edge continues. The determination may be made without requiring any dedicated optimization processing, e.g., by evaluating Eq. (1) for each of the possible lanes of the edge first entered by the vehicle, and then providing the one of the lanes as lane suggestion that results in the lowest objective function.

Machine learning (ML) or other artificial intelligence (AI) processing techniques may be used to identify on which lane the vehicle should drive when entering the first segment (i.e., the one of the several segments at which it encounters the traffic obstruction for the first time when driving along its driving direction). The ML or AI models may be operative to perform the constrained optimization.

For any one of the several edges, the objective function $C_i(\cdot)$ may be dependent not only on the lane, but also on the length of the respective edge and the lane-specific speed. For illustration, for a fastest lane determination, the objective function may be

$$C_i(y_j) = L_i / v_i(y_j) \qquad (2)$$

where $L_i$ denotes a length of the $i^{th}$ edge (measured along its extension direction); and $v_i(y_j)$ denotes the lane-specific speed for the $j^{th}$ edge of the $i^{th}$ edge.

As previously noted, the objective function need not be limited to a travel time estimate (Eq. (2)) but may also be representative of an energy consumption estimate, or a weighted sum of travel time and energy consumption:

$$C_i(y_i) = \beta_t{'}\frac{L_i}{v_i(y_j)} + \beta_e{'}C_{e,i}(y_j) \qquad (3)$$

where $\beta_t$ and $\beta_e$ denote weighting factors for determining the weighted sum; and $C_{e,i}(y_j)$ denotes an objective function representing an energy consumption estimate. The energy consumption estimate will generally be dependent on the length of the edge and the lane-dependent speed.

A limitation on lane changes when determining the lane suggestion does not need to be implemented as a hard constraint, but may also be enforced as a soft constraint. For illustration, the processing system 20 may determine the lane suggestion for the lane to be entered on the edge at which the vehicle runs up to the tail end of the traffic obstruction such that it minimizes as function of the form:

$$C' = \sum_{i=1}^{N} C_i(y_i) + \sum_{i=1}^{N-1} P(y_i; y_{i+1}) \qquad (4)$$

where $P(\cdot;\cdot)$ is a penalty term that penalizes situations in which the lane $y_{i+1}$ on the (i + 1)$^{st}$ edge is different from a lane into which the lane $y_i$ on the $i^{th}$ edge continues.

Using such techniques, the processing system 20 is operative to determine a lane suggestion that specifies which one of the two lanes 51, 52 on the first edge 67 should be used, to allow a vehicle to traverse the traffic obstruction 55 from a start node 64 of the first edge 67 to an end node 65 of a last edge 69 of the several edges (the last edge being the last edge in the driving direction with which the traffic obstruction 55 overlaps). The lane suggestion provides a suggestion for an optimum lane choice (e.g., fastest, most energy efficient, etc.). The lane suggestion can be determined and provided while the vehicle is located on an edge 60 located before (with respect to the driving direction) the several edges 67, 68, 69, i.e., before the vehicle reaches the traffic obstruction.

The processing system 20 may be operative to determine the lane suggestion taking into account previous traffic flow situations, in particular previous lane-specific speeds. Thereby, stability can be enhanced. This accounts for the fact that traffic situations can vary dynamically, in particular when there is a traffic obstruction. Thus, the processing system 20 may be operative to determine, based on historical traffic flow patterns along the several edges, whether the proposal for the lane to be entered on the first edge is stable (in the sense that there is a consistency in the determination of the proposal at least over a historical horizon).

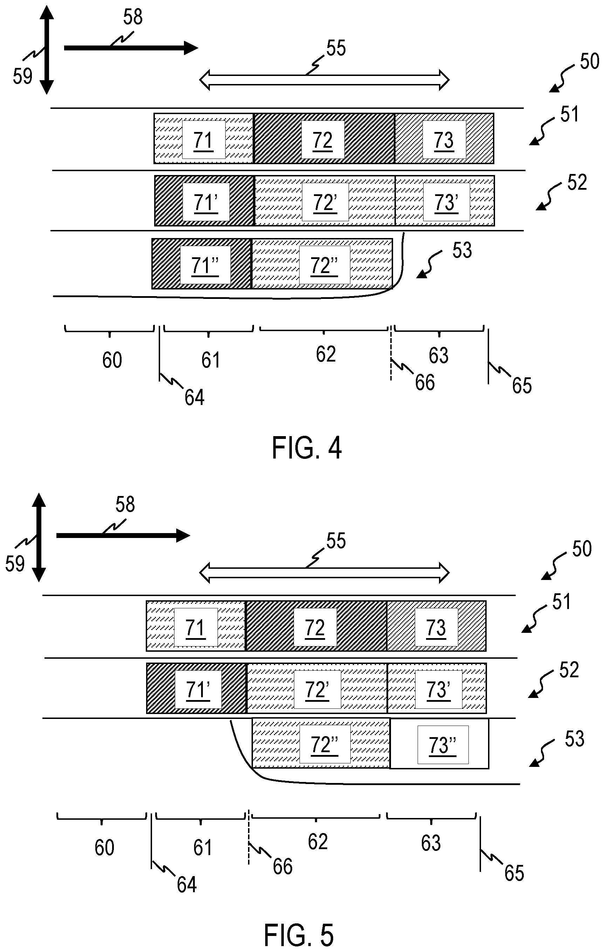

Fig. 4 and Fig. 5 illustrate scenarios in which a count of lanes changes at a node location 66 at which one of the several edges connects to another one of the several edges that overlap with the traffic obstruction. For illustration, some of the edges may have an integer number of $J$ (e.g., two or three) lanes, while other ones of the edges may have $J \pm 1$ lanes. Thus, a lane (such as lane 52 along the length 61 of one of the several edges in Fig. 5) may continue into several lanes (such as lanes 52, 53 along the length 62 of a next one of the several edges in Fig. 5). Alternatively or additionally, the several edges may be such that several lanes (such as lanes 52, 53 along the length 61 of one of the several edges in Fig. 4) may continue into one of the lanes (such as lane 52 along the length 62 of a next one of the several edges in Fig. 4). The processing system may be operative such that either one of the several lanes that are connected to a common lane in an adjacent edge is considered to be a continuation of that lane in the adjacent edge. Thus, even when the constrained optimization identifies a lane suggestion under a constraint that prevents lane changes, the navigable network structure may comprise nodes at which the number of lanes changes for travel along a same direction, in which case several lanes can be connected to one lane in an adjacent edge.

The connectivity or continuity of lanes in case of a change in lane count may be determined in various ways, e.g., based at least on probe data (by monitoring vehicle travel between the adjacent edges having different lane counts) and/or the electronic map data. For illustration, even when the electronic map data does not comprise explicit data specifying how lanes are connected to each other, the processing system 20 may employ logic (that may be based on heuristics) to determine the lane continuity data that specifies which lane of an edge is connected to which lane(s) in an adjacent edge.

An example of logics employed by the processing system 20 to determine the lane continuity if the respective lane continuity data is not explicitly included in the electronic map data may be as follows:

- For turn manoeuvres, neighbouring lanes may not intersect. An example relates to, e.g., two neighbouring lanes turning right. The left of the two neighbouring lanes may additionally go straight or any other direction not intersecting the right of both lanes. On the other hand, the right lane of the two neighbouring lanes may only additionally turn further right, not intersecting the left lane of both.
- Possible turn directions on lanes before an intersection should typically match or be smaller than the number of lanes of the roads after an intersection. More lanes after an intersection are common. For illustration, consider, e.g., two individual lanes joining that come from different directions/roads.
- New lanes typically start to the right or left of existing lanes in left- and right-driving countries, respectively.
- In right driving countries newly starting left turning lanes are more probable than newly starting right turning lanes and others due to the need to wait for counter traffic. The considerations apply *vice versa* for left-driving countries.

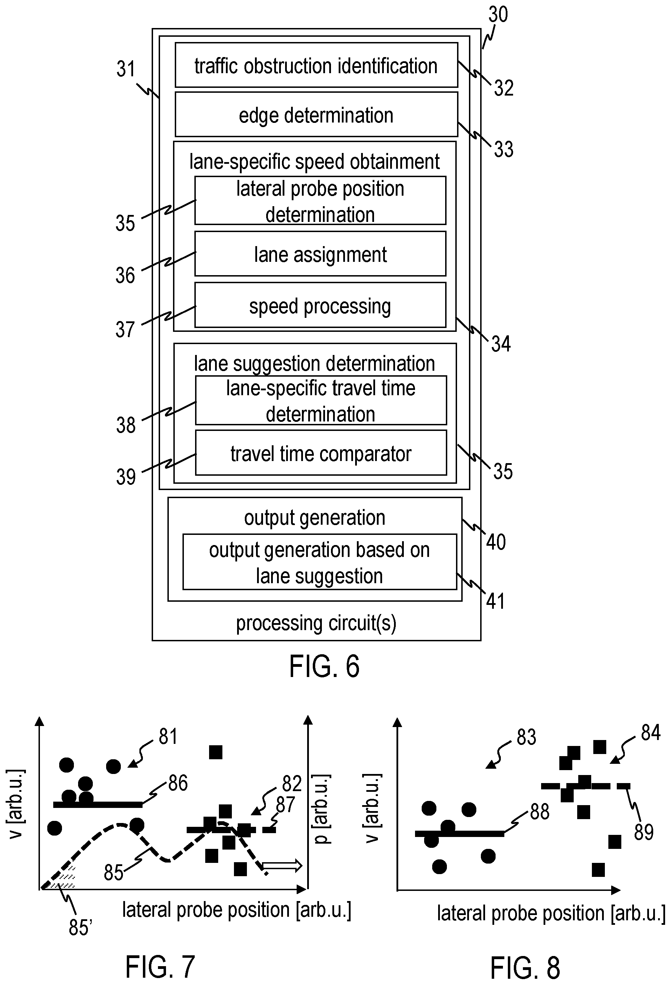

Fig. 6 is a schematic block diagram representation of the at least one processing circuit 30 that may be used in the processing system 20.

The at least one processing circuit 30 may be operative to determine lane-specific speeds for each of the several edges overlapping with the traffic obstruction. The at least one processing circuit 30 may be operative to perform a lateral probe position determination 35 to quantify an offset of the probe position from a characteristic line of the edge (e.g., a road center line). The at least one processing circuit 30 may be operative to perform a lane assignment 36 based at least on the lateral probe positions, optionally also based on lane width data and/or lane count data that may be included in the electronic map data. The at least one processing circuit 30 may be operative to perform a speed processing 37 to process speeds of several probes assigned to a lane of an edge to determine the lane-specific speed for that lane of the respective edge. The at least one processing circuit 30 may be operative to determine the lane-specific speeds for each one of the several edges that overlap with the traffic obstruction.

The at least one processing circuit 30 may be operative to perform a lane-specific travel time determination. The lane-specific travel time may determine an estimated travel time based on, e.g., Eq. (2), using the lane-specific speeds and the lengths of the several edges. By determining the travel time estimate for passing through all of the several edges 67, 68, 69 (based on, e.g., Eq. (2)) for any of the lanes on the first edge 67, possible travel times are determined by a travel time determination 38. A travel time comparator 39 may identify the optimum (shortest) travel time and the associated lane suggestion that results in the optimum travel time.

The at least one processing circuit 30 may be operative to evaluate objective functions that are representative of quantities other than travel time, such as an energy consumption estimate that is a monotonously increasing function of edge length and lane-specific speed, but which may also take into consideration speed changes that necessitate acceleration.

The at least one processing circuit 30 may be operative to perform the output generation 41 based at least on the lane suggestion. The output generation 41 may comprise controlling an interface (such as a data interface and/or a HMI) to provide output that is dependent on the lane suggestion.

Fig. 7 and Fig. 8 illustrate techniques that may be employed by the processing system 20 to determine the lane-specific speeds. Fig. 7 and Fig. 8 respectively illustrate, as a function of lateral probe positions (i.e., as a function of lateral position on the road) probe speeds (depicted as symbols 81, 82, 83, 84) and a distribution of a probe having the respective lateral probe position (depicted as broken line 85). The presence of lanes can result in a multi-modal (e.g., bi-modal) statistical distribution of lateral probe positions, but this does not need to be the case. For illustration, positioning errors can lead to a more extensive broadening of the local maxima of the statistical distribution than what is illustrated in Fig. 7. The lateral probe positions, optionally also the lateral probe position statistics 85, are used to assign probes to lanes. Lane-specific speeds 86, 87, 88, 89 can then be determined based at least on the probe speeds of probes assigned to the respective lanes. The lane-specific speeds 86, 87, 88, 89 can be determined as average or median speeds or otherwise based at least on a speed statistics of the probe speeds (e.g., by averaging a maximum and minimum of a part of a speed statistics that encompasses at least a threshold percentage of probes).

The processing system 20 may be operative to use a tail portion 85' of the lateral probe position distribution 85 when determining the lane-specific speeds of outermost lanes. For illustration, for probes included in a certain percentage (e.g., at most 30% or at most 20% or at most 10%) of probes having lateral probe positions with largest modulus, it is very likely for the respective probes to be travelling on an outermost (leftmost or rightmost) lane. Thereby, the lane-specific speed can be determined based at least on the tail portion 85' of the lateral probe position distribution 85 in a particularly reliable and robust manner, at least for the outermost (leftmost and rightmost) lanes of each of the several edges.

The processing system 20 and/or the methods may be operative to provide output based at least on the lane suggestion determination selectively dependent on (temporal) stability of lane-specific speeds and/or based on whether the lane suggestion determination results in a consistent suggestion for the lane to be used that is stable as a function of time. For illustration, the processing system 20 may evaluate a metric quantifying variations in lane-specific speeds and/or the resultant lane suggestion, and may evaluate the quantification of the variations to determine whether the output is to be provided.

The processing system 20 and/or the methods may be operative to not only determine the fastest lane, but also the slowest lane to be entered on the first edge 67 overlapping with the traffic obstruction. The output may be based at least on both the best-performing and the worst-performing lane. This facilitates actions to be taken that, while encouraging use of the optimum lane, also discourage use of the worst-performing lane.

The processing system 20 and/or the methods may be operative to perform the various operations for each of a plurality of traffic obstructions that may concurrently exist in the navigable network.

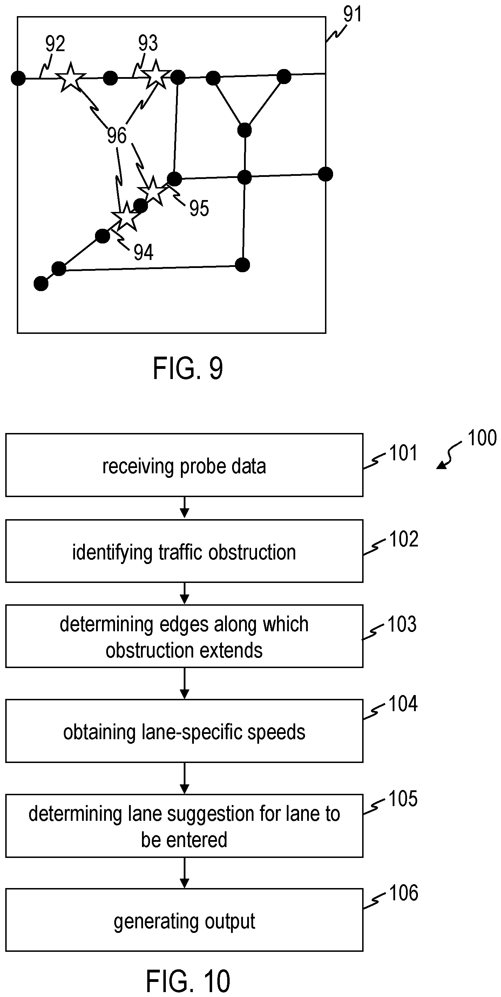

Fig. 9 illustrates an exemplary portion of a navigable network 91. Edges affected by traffic obstructions are marked by a star symbol 96. The processing system 20 and/or the methods may be operative to determine the lane suggestion for a first traffic obstruction overlapping with a several edges 92, 93, and for a second traffic obstruction overlapping with several other edges 94, 95. The processing may respectively be performed as discussed in detail herein.

Fig. 10 is a flow chart of a method 100. The method 100 may be performed automatically by or using the processing system 20 or by a system that comprises the processing system 20.

At process block 101, the processing system 20 receives the probe data 48 comprising GNSS-based position data. The GNSS-based position data may comprise GPS fixes and/or a GPS traces. The probe data may comprise data other than GNSS-based position data, such as probe speeds collected by a speed sensor different from the GNSS receiver of the probe. The processing system 20 may be operative to receive the probe data 48 from the probes via a communication system. The communication system may comprise a wide area network (WAN) and/or a cellular communication system.

At process block 102, the processing system 20 identifies a traffic obstruction. Identifying the obstruction may be based on any one or any combination of: a density of probes; a comparison of probe speeds with speed limits (with probe speeds much smaller than the speed limits indicating presence of an obstruction); communicatively interfacing with a traffic service (such as a Traffic Message Channel (TMC) service). Identifying the traffic obstruction may comprise determining geo-coordinates of the obstruction.

At process block 103, the processing system 20 identifies all edges that overlap with the traffic obstruction.

At process block 104, the processing system 20 obtains lane-specific speeds for all lanes of each of the several edges overlapping with the traffic obstruction. Obtaining the lane-specific speeds may comprise performing a lane assignment of probes and processing probe speeds of probes assigned to a lane to determine the lane-specific speed (e.g., by averaging, median determination, or otherwise processing probe speed statistics).

At process block 105, the processing system 20 determines a lane suggestion for a lane on which a vehicle should be located on one of the edges that is reached first when driving towards the traffic obstruction. Determining the lane suggestion comprises an optimization of an objective function under a constraint imposed on lane changes. Determining the lane suggestion may comprise an optimization of travel time through the several edges 67, 68, 69 under a constraint that no lane changes may be performed (e.g., in the sense that the vehicle will transition from a lane of an edge to another lane of an adjacent edge that is connected to the lane from which the vehicle transitions into the adjacent edge). Optionally, the processing system 20 may also determine a worst-performing lane.

At process block 106, the processing system 20 generates output based at least on the lane suggestion. Generating the output may comprise a control action that is dependent on at least the lane suggestion. The control action may comprise a human machine interface (HMI) control action to provide route guidance to a human driver. The control action may comprise an automatic vehicle system operation, e.g., to implement an ADAS or autonomous driving function based at least on the lane suggestion (such as setting a target lane of lane keeping).

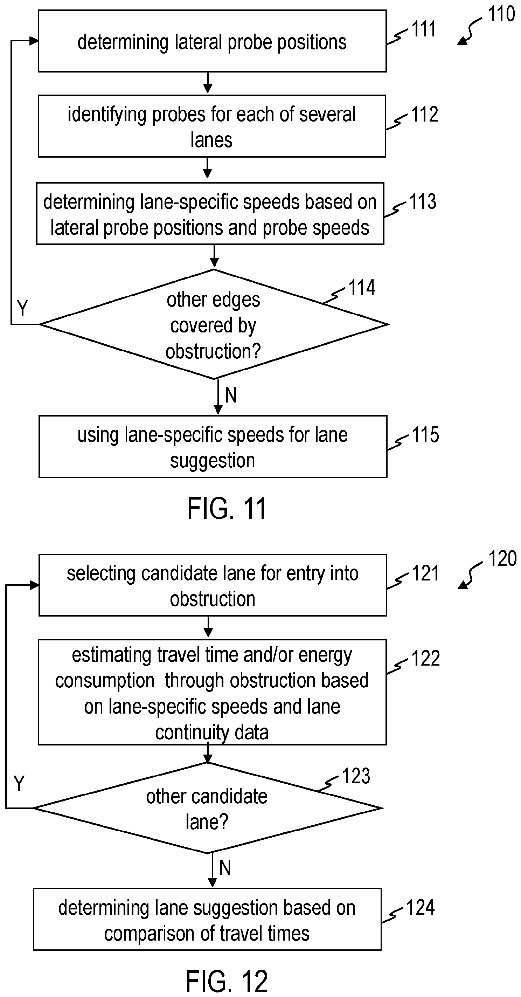

Fig. 11 is a flow chart of a process 110. The process 110 may be performed automatically by or using the processing system 20 or by a system that comprises the processing system 20. The process 110 may be performed to implement process block 104 of the method 100.

At process block 111, the processing system 20 determines lateral probe positions for probes located on one of the several edges. The lateral probe positions are determined based at least on the electronic map data and the probe positions included in the probe data.

At process block 112, the processing system 20 identifies probes located on each of several lanes of the edge. This may comprise assigning probes to lanes based on, e.g., lateral probe positions and, optionally, lane data included in the electronic map data.

At process block 113, the processing system 20 determines the lane-specific speeds for the edge. Determining the lane-specific speeds may comprise, e.g., averaging, median determination, or otherwise processing probe speed statistics to determine the lane-specific speeds for all lanes.

At process block 114, the processing system 20 determines whether there are any additional edges overlapping with the traffic obstruction. Process blocks 111, 112,and 113 are repeated until all edges have been considered and lane-specific speeds are available for each one of the several edges overlapping with the traffic obstruction.

At process block 115, the processing system 20 uses the lane-specific speeds for determining the lane suggestion. This may comprise buffering the lane-specific speeds.

As previously explained, the processing system 20 may optionally quantify temporal variations of the lane-specific speeds to determine whether a robust lane suggestion can be made.

Fig. 12 is a flow chart of a process 120. The process 120 may be performed automatically by or using the processing system 20 or by a system that comprises the processing system 20. The process 120 may be performed to implement process block 105 of the method 100.

At process block 121, the processing system 20 selects a candidate lane (e.g., an outermost lane) of the one of the several edges that will be reached first by a vehicle driving towards the traffic obstruction.

At process block 122, the processing system 20 determines a travel time estimate for passage through all of the several edges(and/or evaluates another objective function), while constraining the number of lane changes allowed for determining the travel time estimate (or other objective function evaluation). Data specifying how lanes on adjacent edges are connected to each other (i.e., the lane continuity data) are used to enforce the constraint on the number of lane changes.

At process block 123, the processing system 20 determines whether there is any unconsidered lane on the one of the several edges that will be reached first by a vehicle driving towards the traffic obstruction. If there is such an unconsidered lane that could be entered, process blocks 121 and 122 are repeated. The repetition is continued until all possible candidate lanes have been considered.

At process block 124, the processing system 20 determines the lane suggestion based at least on a comparison of travel time estimates (and/or other objective function values). The processing system 20 can thereby identify the lane on the first edge 67 that is expected to result in optimal travel (e.g., shortest travel time) through the obstruction when assuming that there is a constraint on the number of lane changes, e.g., that no lane changes are allowed.

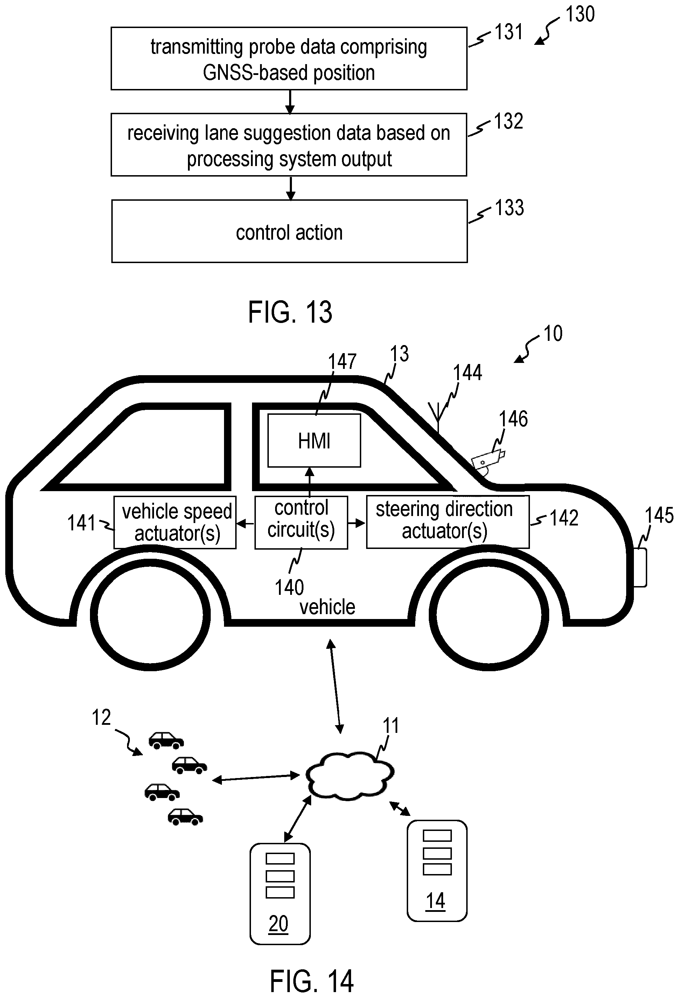

Fig. 13 is a flow chart of a method 130. The method 130 may be performed automatically by a probe operative to interact with the processing system 20. The method 130 may be performed by a probe of a system that comprises the probe, the processing system 20, and a communication system via which the processing system 20 and the probe can be communicatively interfaced.

At process block 131, the probe transmits probe data. The probe data comprises GNSS-based position data. The GNSS-based position data may comprise GPS fixes and/or a GPS traces. The probe data may comprise data other than GNSS-based position data, such as probe speeds collected by a speed sensor different from the GNSS receiver of the probe. The probe may transmit the probe data to the processing system 20 via a communication system that may comprise a WAN and/or a cellular communication system.

At process block 132, the probe receives lane suggestion data that comprises or is otherwise based on the output provided by the processing system and/or the lane suggestion determined by the processing system. Receiving the lane suggestion data may comprise receiving the lane suggestion data before the probe reaches the first edge 67 on which it will encounter the tail end of the traffic obstruction.

At process block 133, a control action is performed. The control action may comprise a HMI control action (e.g., to output the lane suggestion) and/or a vehicle system operation. The control action is dependent on at least the lane suggestion.

Fig. 14 is a schematic representation of a system 10. The system 10 comprises the processing system 20.

The system 10 comprises a plurality of probes 12, which may include probes fixedly or removably arranged in the a plurality of vehicles. Each of the probes includes at least a GNSS-based receiver and a wireless interface operative to provide GNSS-based position data (and optionally other probe data) to the processing system 20 via a communication system 11. The communication system 11 may comprise a WAN and/or a cellular network. Obfuscation techniques may be used to safeguard driver privacy.

The system 10 comprises a vehicle 13. The vehicle 13 comprises at least one control circuit 140 (i.e., one or several control circuits 140). The at least one control circuit 140 may comprise any one or any combination of integrated circuits, integrated semiconductor circuits, processors, controllers, application specific integrated circuits (ASICs), field programmable gate arrays (FPGAs), circuit(s) including quantum bits (qubits) and/or quantum gates, without being limited thereto.

The vehicle 13 comprises a wireless interface 144 operative to receive the output provided by the processing system 20 and/or lane suggestion data that comprises or is otherwise based on the lane suggestion determined by the processing system.

The at least one control circuit 140 may be operative to perform one or several control operations based at least on the lane suggestion. For illustration, the at least one control circuit 140 may be operative to use the lane suggestion to perform lane-level guidance. The at least one control circuit 140 may be operative to control an HMI 147 of the vehicle 13 to output the lane suggestion. The at least one control circuit 140 may optionally be operative to control the HMI 147 to provide information on a worst-performing lane.

Alternatively or additionally, the at least one control circuit 140 may be operative to effect control of one or several actuators of the vehicle 13 based at least on the lane suggestion. The one or several actuators may comprise a vehicle speed actuator 141 which is operative to be actuated to influence the vehicle speed or engine torque, and/or a steering direction actuator 142 which is operative to be actuated to influence a driving direction of the vehicle 13. The at least one control circuit 140 may be operative to perform an ADAS function and/or autonomous driving function based at least on the received data, which is dependent on the lane suggestion. The ADAS function and/or autonomous driving function may comprise an actuator control operation in which at least one vehicle actuator 141, 142 is controlled, e.g., to perform lane keeping based at least on the lane suggestion.

The at least one control circuit 140 may be operative to perform the at least one lane-level ADAS function and/or autonomous driving function based on both the data received via the interface 144 and sensor data captured using one or several onboard a vehicle sensors 145, 146. The vehicle sensor(s) may comprise a distance sensor 145 and/or at least one camera 146. For illustration, the at least one control circuit 140 may be operative to combine lane suggestion data received via the interface 144 with sensor data captured by the vehicle sensor(s) 145, 146 to generate a world model of the vehicle environment, which is then used to perform the at least one lane-level ADAS function and/or autonomous driving function.

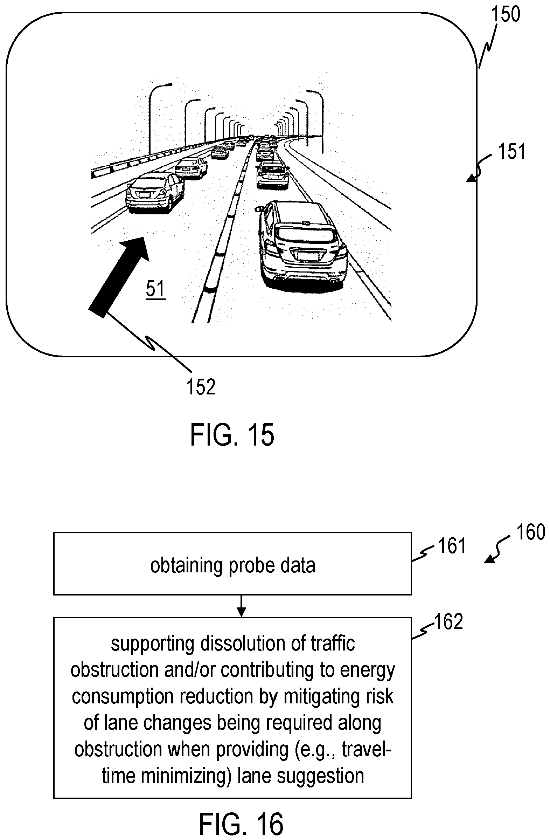

Fig. 15 is a schematic representation of HMI output 150. The processing system 20 and/or the vehicle 13 may be operative to cause the HMI output 150 to be generated and provided via an HMI to provide output 152 (e.g., graphical output that may be superimposed on a real-world or computer-generated image) indicating the lane suggestion. The output 152 may indicate which of the lanes 51, 52 should be chosen.

Fig. 16 is a flow chart of a method 160. The method 160 may be performed automatically by or using the processing system 20 or the system 10 comprising the processing system 20. The method 160 may be a method 160 of supporting dissolution of the traffic obstruction and/or reducing energy consumption in the traffic obstruction.

At process block 161, the processing system 20 receives the probe data 48 comprising GNSS-based position data. The GNSS-based position data may comprise GPS fixes and/or a GPS traces. The probe data may comprise data other than GNSS-based position data, such as probe speeds collected by a speed sensor different from the GNSS receiver of the probe. The processing system 20 may be operative to receive the probe data 48 from the probes via a communication system that may comprise a WAN and/or a cellular communication system.

At process block 162, the processing system 20 and/or the system 10 supports the dissolution of the traffic obstruction and/or contributes to reducing overall energy consumption, by providing a lane suggestion determined using the techniques disclosed herein. The lane suggestion may be determined by a constrained optimization, with the number of lane changes being constrained (e.g., to zero) when determining the lane suggestion.

Thus, techniques disclosed herein may be operative such that they determine a suggestion for a lane that is optimal, in the sense of resulting in an extremum of an objective function (such as minimum travel time) in a constrained optimization, while eliminating the need for lane changes to attain that optimality.

While embodiments have been described with reference to the drawings, modifications and alterations may be implemented in other embodiments. While exemplary use cases in which the methods and vehicle processing system can be applied have been described in detail, the techniques disclosed herein may be used in association with a variety of additional scenarios.

For illustration, while embodiments have been described in which the processing system 20 is operative to use probe data from a plurality of probes 12, the probes 12 and processing system 20 may be operative for bidirectional communication, with the probes 12 utilizing the output provided by the processing system 20 to perform the at least one lane level traffic-based function.

For further illustration, the processing system and methods may be operative to restrict the probe data processing disclosed herein to edges on which a robust determination of a lane suggestion is possible, based at least on temporal variations of lane-specific speeds and/or temporal variations of a result of the lane suggestion. This may be quantified in a stability analysis, for example.

This description and the accompanying drawings that illustrate aspects and embodiments of the present invention should not be taken as limiting-the claims defining the protected invention. In other words, while the invention has been illustrated and described in detail in the drawings and foregoing description, such illustration and description are to be considered illustrative and not restrictive. Various mechanical, compositional, structural, electrical, and operational changes may be made without departing from the spirit and scope of this description and the claims. In some instances, well-known circuits, structures and techniques have not been shown in detail in order not to obscure the invention. Thus, it will be understood that changes and modifications may be made by those of ordinary skill within the scope and spirit of the following claims. In particular, the present invention covers further embodiments with any combination of features from different embodiments described above and below.

The disclosure also covers all further features shown in the Figures individually although they may not have been described in the afore or following description. Also, single alternatives of the embodiments described in the Figures and the description and single alternatives of features thereof can be disclaimed from the subject matter of the invention or from disclosed subject matter. The disclosure comprises subject matter consisting of the features defined in the claims or the embodiments as well as subject matter comprising said features.

The term "comprising" does not exclude other elements or process blocks, and the indefinite article "a" or "an" does not exclude a plurality. A single unit or process block may fulfil the functions of several features recited in the claims. The mere fact that certain measures are recited in mutually different dependent claims does not indicate that a combination of these measures cannot be used to advantage. Components described as coupled or connected may be electrically or mechanically directly coupled, or they may be indirectly coupled via one or more intermediate components. Any reference signs in the claims should not be construed as limiting the scope.

A machine-readable instruction code may be stored/distributed on a suitable medium, such as an optical storage medium or a solid-state medium supplied together with or as part of other hardware, but may also be distributed in other forms, such as via a wide area network or other wired or wireless telecommunication systems. Furthermore, a machine-readable instruction code can also be a data structure product or a signal for embodying a specific method such as the method according to embodiments.

## Claims

1. A method for performance of a lane-level function, the method comprising:

   identifying, by a processing system (20), a traffic obstruction (55) in a navigable network;
   determining, by the processing system (20), several edges (67, 68, 69) of the navigable network along which the traffic obstruction (55) extends, wherein the several edges (67, 68, 69) are adjacent to each other, wherein a union of the several edges (67, 68, 69) extends across the traffic obstruction (55), and wherein the several edges (67, 68, 69) comprise a first edge (67) on which a tail end of the traffic obstruction (55) is located;
   obtaining, by the processing system (20), lane-specific speeds (71, 71', 72, 72', 73, 73; 86, 87; 88, 89) for several lanes of each of the several edges (67, 68, 69), comprising obtaining the lane-specific speeds (71, 71', 72, 72', 73, 73; 86, 87; 88, 89) for at least two different lanes in each of the several edges (67, 68, 69) that have a same driving direction, based at least on probe data (48) of probes (12) along the several edges (67, 68, 69);
   determining, by the processing system (20) and based at least on the lane-specific speeds (71, 71', 72, 72', 73, 73; 86, 87; 88, 89), a lane suggestion, comprising: identifying, on the first edge (67), a lane to be entered that allows passage through the traffic obstruction (55) while minimizing an objective function with a constraint imposed on a number of lane changes while travelling through the traffic obstruction (55); and
   generating output (49) based at least on the lane suggestion.

2. The method of claim 1, wherein the constraint comprises absence of lane changes while travelling through the traffic obstruction (55).

3. The method of claim 1 or claim 2, wherein the constraint is dependent on a length of the traffic obstruction (55).

4. The method of any one of the preceding claims, wherein the objective function is dependent on at least one of:

   a travel time estimate for passing through the traffic obstruction (55);
   an energy consumption estimate for passing through the traffic obstruction (55).

5. The method of any one of the preceding claims, wherein the processing system (20) determines the lane suggestion further based on lane continuity data (25) that specifies, for each of several first lanes of one of the several edges (67, 68, 69), an associated second lane of an adjacent one of the several edges (67, 68, 69) into which the respective first lane continues.

6. The method of claim 5, further comprising determining, by the processing system (20), the lane continuity data (25) based on electronic map data (24), optionally wherein the processing system (20) determines the lane-continuity data (25) based at least on a location of the several edges (67, 68, 69) relative to one or several road junctions.

7. The method of any one of the preceding claims, wherein obtaining the lane-specific speeds (71, 71', 72, 72', 73, 73; 86, 87; 88, 89) comprises determining the lane-specific speeds (71, 71', 72, 72', 73, 73; 86, 87; 88, 89) based at least on lateral probe positions indicated by the probe data (48).

8. The method of claim 7, wherein obtaining the lane specific speeds comprises determining, for each of the several edges (67, 68, 69), lane positions based at least on the lateral probe positions, the lateral probe positions indicating positions along a transverse direction that is transverse to an edge extension direction; performing a lane assignment that assigns probes to lanes based at least on the probe positions and the lane positions; and determining the lane-specific speeds (71, 71', 72, 72', 73, 73; 86, 87; 88, 89) based at least on the lane assignment and probe speeds along the edge extension direction.

9. The method of claim 8, wherein determining the lane positions comprises identifying, based at least on the probe positions, a probe position distribution (85) of probe positions along the transverse direction, wherein the lane positions are determined based at least on tails (85') of the probe position distribution (85).

10. The method of any one of the preceding claims, wherein the output (49) comprises guidance instructions for a vehicle driver or a vehicle system of a vehicle.

11. The method of claim 10, wherein the output (49) is generated before the vehicle reaches the several edges (67, 68, 69).

12. The method of any one of the preceding claims, further comprising performing, by a vehicle system, at least one action based at least on the output (49), the at least one action comprising any one or any combination of: a driver assistance function; an advanced driver assistance function; an autonomous driving function.

13. Machine readable instruction code which, upon execution by at least one programmable circuit, causes the at least one programmable circuit to perform the method of any one of the preceding claims.

14. A processing system (20) for performance of a lane-level function, the processing system (20) comprising:

    at least one interface (21, 22) operative to receive probe data (48);
    at least one processing circuit (30) operative to:

       identify a traffic obstruction (55) in a navigable network;
       determine several edges (67, 68, 69) of the navigable network along which the traffic obstruction (55) extends, the several edges (67, 68, 69) being adjacent to each other, a union of the several edges (67, 68, 69) extending across the traffic obstruction (55), the several edges (67, 68, 69) comprising a first edge (67) on which a tail end of the traffic obstruction (55) is located;
       obtain lane-specific speeds (71, 71', 72, 72', 73, 73; 86, 87; 88, 89) for several lanes of each of the several edges (67, 68, 69), the at least one processing circuit (30) being operative to obtain the lane-specific speeds (71, 71', 72, 72', 73, 73; 86, 87; 88, 89) for at least two different lanes in each of the several edges (67, 68, 69) that have a same driving direction, based at least on the probe data (48) of probes (12) along the several edges (67, 68, 69);

determine, based at least on the lane-specific speeds (71, 71', 72, 72', 73, 73; 86, 87; 88, 89), a lane suggestion by identifying, on the first edge (67), a lane to be entered that allows passage through the traffic obstruction (55) while minimizing an objective function with a constraint imposed on a number of lane changes while travelling through the traffic obstruction (55); and

control the at least one interface (21, 22) to generate output (49) based at least on the lane suggestion

15. A system, comprising:

the processing system (20) of claim 14;

at least one device operative to receive the output (49) and provide guidance instructions for a vehicle driver or a vehicle system of a vehicle before the vehicle reaches the several edges (67, 68, 69).

FIG. 1

FIG. 2

FIG. 3

FIG. 4

FIG. 5

30

31

| traffic obstruction identification | 32 |
| edge determination | 33 |

**lane-specific speed obtainment**

| lateral probe position determination | 35 |
| lane assignment | 36 |
| speed processing | 37 |

34

**lane suggestion determination**

| lane-specific travel time determination | 38 |
| travel time comparator | 39 |

35

**output generation**

| output generation based on lane suggestion | 41 |

40

processing circuit(s)

FIG. 6

FIG. 7

FIG. 8

FIG. 9

FIG. 10

determining lateral probe positions — 111    ⟲ 110

↓

identifying probes for each of several lanes — 112

↓

determining lane-specific speeds based on lateral probe positions and probe speeds — 113

↓

other edges covered by obstruction? — 114

Y →

↓ N

using lane-specific speeds for lane suggestion — 115

## FIG. 11

selecting candidate lane for entry into obstruction — 121    ⟲ 120

↓

estimating travel time and/or energy consumption through obstruction based on lane-specific speeds and lane continuity data — 122

↓

other candidate lane? — 123

Y →

↓ N

determining lane suggestion based on comparison of travel times — 124

## FIG. 12

131 130

transmitting probe data comprising
GNSS-based position

132

receiving lane suggestion data based on
processing system output

133

control action

## FIG. 13

147 13 144 10

146

HMI

141 vehicle speed
actuator(s)

control
circuit(s)

steering direction
actuator(s) 142

145

140
vehicle

12

11

20

14

## FIG. 14

150
151
51
152

FIG. 15

161    160

obtaining probe data

162

supporting dissolution of traffic
obstruction and/or contributing to energy
consumption reduction by mitigating risk
of lane changes being required along
obstruction when providing (e.g., travel-
time minimizing) lane suggestion

FIG. 16

| | Europäisches Patentamt European Patent Office Office européen des brevets | **EUROPEAN SEARCH REPORT** | Application Number EP 24 21 5606 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/282264 A1 (BASTIAENSEN EDWIN [BE] ET AL) 24 October 2013 (2013-10-24) <br> * paragraphs [0001], [0027] - [0030], [0036], [0040], [0041], [0050], [0052], [0060] - [0066] * <br> * paragraphs [0132], [0157], [0158], [0167] * <br> * figures 5, 6 * <br> ----- | 1-15 | INV. <br> G08G1/16 <br> G08G1/01 <br> G01C21/34 <br> G01C21/36 |
| X <br><br> A | US 2023/177963 A1 (JOO YOUNG SUNG [KR]) 8 June 2023 (2023-06-08) <br> * paragraphs [0008], [0012], [0013], [0020] - [0026], [0058], [0073], [0078] - [0089] * <br> * paragraphs [0102] - [0110], [0126] * <br> * figures 1, 6, 8, 11, 12 * <br> ----- | 1,13,14 <br><br> 2-12,15 | |
| A | US 2021/148725 A1 (WATAHIKI TOMOAKI [JP] ET AL) 20 May 2021 (2021-05-20) <br> * paragraphs [0017], [0021], [0047] - [0049] * <br> ----- | 1-15 | TECHNICAL FIELDS SEARCHED (IPC) <br><br> G08G <br> G01C |

The present search report has been drawn up for all claims

| Place of search | Date of completion of the search | Examiner |
|---|---|---|
| The Hague | 30 April 2025 | Roxer, Adam |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons

& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 24 21 5606

This annex lists the patent family members relating to the patent documents cited in the above-mentioned European search report.
The members are as contained in the European Patent Office EDP file on
The European Patent Office is in no way liable for these particulars which are merely given for the purpose of information.

30-04-2025

| Patent document cited in search report | Publication date | Patent family member(s) | Publication date |
|---|---|---|---|
| US 2013282264 A1 | 24-10-2013 | EP 2659469 A1 | 06-11-2013 |
| | | US 2013282264 A1 | 24-10-2013 |
| | | WO 2012089281 A1 | 05-07-2012 |
| US 2023177963 A1 | 08-06-2023 | KR 20230085697 A | 14-06-2023 |
| | | US 2023177963 A1 | 08-06-2023 |
| US 2021148725 A1 | 20-05-2021 | CN 112449675 A | 05-03-2021 |
| | | EP 3779364 A1 | 17-02-2021 |
| | | JP 6983308 B2 | 17-12-2021 |
| | | JP WO2019198481 A1 | 15-04-2021 |
| | | US 2021148725 A1 | 20-05-2021 |
| | | WO 2019198481 A1 | 17-10-2019 |

For more details about this annex : see Official Journal of the European Patent Office, No. 12/82

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- KR 101615970 B1

- US 20130282264 A1